# EUROPEAN PATENT APPLICATION

(11) **EP 3 738 717 A1**
(43) Date of publication of application: **18.11.2020**
(21) Application number: 19174488.7
(22) Date of filing: 14.05.2019
(51) Int. Cl.: B25H 1/00, B25J 9/06, B25J 11/00, B25B 21/00

(54) **MOUNTING ARRANGEMENT**

(71) Applicant: Siemens Gamesa Renewable Energy A/S, 7330 Brande (DK)
(72) Inventor: Jensen, Jens Hald, 7323 Give (DK); Rohde, Kim Hauge, 7100 Vejle (DK)
(74) Representative: Aspacher, Karl-Georg

(57) **Abstract**

Mounting arrangement for mounting an at least partially threaded bolt (6) connecting one element (1) to another element (2), with one element (1) having a through bore (7) and the other element (2) having a threaded bore (8), comprising a flexible carrier (11) adapted to be fixed to one of the elements (1, 2), the carrier (11) being movable relative to the elements (1, 2), a tool mounting means (14) attached to the carrier (11) comprising a tool mount (24) which is movable against a restoring force relative to the carrier (11), to which tool mount (24) a tool (30) adapted to be connected to the bolt (6) is attachable or attached.

## Description

The invention refers to a mounting arrangement for mounting an at least partially threaded bolt connecting one element to another element, with one element having a through bore and the other element having a threaded bore.

In many appliances two elements need to be fixed to each other by means of a number of bolts, which are inserted into a through bore of the one element and are then tightly screwed into a threaded bore of the other element. A prominent example is a wind turbine, where the main bearing house and the bedframe are fixed to one another by means of such bolts. As the size of modern wind turbines increases, also the number and the weight of the bolts for fixing the bearing house to the bedframe increases. As the technician needs to work overhead with the screwing tool as the bolts are inserted from below into the first element, i.e. the bedframe, the mounting of for example more than 100 bolts is very cumbersome. This becomes even more problematic, as the bolts are usually mounted with a washer and a nut attached to them, so that each bolt weighs more than 10 kg.

It is therefore an object of the invention to provide a mounting arrangement assisting the technician when mounting the bolts.

For solving the problem the invention proposes a mounting arrangement for mounting an at least partially threaded bolt connecting one element to another element, with one element having a through bore and the other element having a threaded bore, comprising a flexible carrier adapted to be fixed to one of the elements, the carrier being movable relative to the elements, a tool mounting means attached to the carrier comprising a tool mount which is movable against a restoring force relative to the carrier, to which tool mount a tool adapted to be connected to the bolt is attachable or attached.

The inventive mounting arrangement allows a simplified mounting process. It comprises a flexible, movable carrier which is fixed to one of the elements. The carrier is attached to a tool mounting means, which can be moved via the carrier. As a tool is attached or attachable to the tool mounting means, which tool is used for screwing the bolt into the bores, this tool can be positioned via the carrier relative to the bore. Usually, an electric screwing tool is used.

The tool mount is movable against a restoring force relative to the carrier, allowing for the tool mount to be positioned not only via the carrier relative to the bolt, but also by moving the tool mount itself. If for example the bolt, which is already inserted into the through bore and fixed by an appropriate fixing means in this position, is inserted from below into this through bore and needs to be connected by the tool from underneath, it is possible to first move the tool close to the bolt and then move the tool mount with the tool against the restoring force, so that the tool is brought in a position where it can be connected to the bolt, which bolt comprises a respective engagement section like a hex head. When the tool mount is released, the restoring force moves the tool mount and the tool for finally coupling the tool to the bolt. Afterwards it is only necessary to screw the bolt by means of the electric tool, while the restoring force continuously urges the tool against the bolt, so that the tool continuously follows the bolt movement. The technician therefore only needs to start the electric tool for starting the screwing process, but he does no longer need to firmly press the tool against the bolt, as the permanent connection to the bolt is maintained by the restoring force.

With the inventive mounting arrangement it is easily possible to position and connect the tool to the bolt, and to easily mount the bolt, as the connection between the tool and the bolt is permanently maintained via the restoring force. Therefore, the mounting of the bolts is easy and can be done in short time.

It is possible to pre-place the bolt in the through bore of the first element, for example the bedframe, by using an appropriate bolt lifting equipment for pre-placing the bolt prior to the assembly and connection with the bearing house. The bolts are temporarily fixed in the through bore by an appropriate fixing means. In this case the tool is connected to the already pre-placed bolt when being positioned for example below the bolt and when the tool is moved in contact to the bolt via the restoring force. This pre-placement is preferably done, when the bolts are long, especially when they are longer than the distance along which the tool can be moved via the restoring force. In an alternative embodiment it is possible to connect the bolt to the tool before inserting the bolt in the through bore. Here, the tool with the bolt is moved via the carrier and the movable tool mount to position the bolt relative to the through bore and to then insert it in the through bore via the restoring force, after which the screwing process can be started.

In any case the possibility to move the tool mount against the restoring force, allowing for a constantly tight connection of the tool and the bolt during the screwing process by means of the restoring force, simplifies the mounting process.

The carrier may be movable in a plane, while the tool mount is movable in a direction vertical to this plane. Therefore, the tool mount is supported by respectively braced against the carrier, so that all forces resting on the tool during the screwing process are supported by the carrier.

The carrier may comprise a number of elongated carrier elements pivotable attached to one another in a row with parallel longitudinal axes. This type of carrier, which may also be named as a "FlexiCrane", is suitable for a movement of the carrier within the plane, as the carrier can be, snake-like, moved due to the pivotable attachment of the respective elongated carrier elements to one another. As these elements are elongated, this kind of carrier can support the tool mount and thus the tool.

In an alternative to a carrier comprising a number of elongated carrier elements, the carrier may also be a robot arm with at least two arm elements, which are swivable and/rotatable relative to each other. Also, such a robot arm provides the respective directions of movement for moving the tool mount relative to the bolt and for supporting it. The robot arms may be swivable connected, so that they can move around an axis relative to each other. They may also be, preferably additionally, be connected rotatable, so that they can rotate about a common axis giving another degree of freedom.

In a further embodiment of the invention, the tool mount comprises an attachment section for attaching it to the carrier, wherein the tool mount attached to the mounting section is movable relative to the mounting section against the restoring force. The attachment section connects the tool mounting means to the carrier. This may be a stable connection with the tool mounting means not being movable as a whole relative to the carrier. In an alternative, the mounting section may be swivable attached to the carrier element of the carrier, or it may be rotatable or swivable attached to an arm element of the robot arm. According to these embodiments also the connection of the tool mounting means to the carrier provides another degree of freedom allowing for a very precise positioning of the tool.

As mentioned above, a central feature of the invention is the restoring force, against which the tool mount is movable. This restoring force may be provided by a spring element, against which the tool mount is movable. When the tool mount is moved for positioning it relative to the bolt or positioning the bolt relative to the bore, the spring is compressed, generating the restoring force, which relaxes during the screwing process moving the tool to follow the bolt.

Preferably, this spring element is a coil spring arranged in a spring holding means, where it rests with one end, while the other end is attached to a connecting section of the tool mount which can be moved in order to compress the coil spring. This embodiment provides a simple mechanical connection of the respective element. The holding means is used for resting the coil spring with one end. The connecting section of the tool mount is attached to the other end of the coil spring. When the tool mount is manually moved, the attachment of the connecting section is also moved and the coil spring is compressed. When the coil spring relaxes, the tool mount is moved in the other direction, as the connecting section is moved by the relaxing coil spring.

The holding means is preferably a cylinder and the connecting section comprises a resting means attached to the coil spring end and a rod extending through the coil spring, to which rod a tool mounting section is attached. The tool mounting section is the section, where the tool is finally attached respectively mounted. The resting means may for example be a circular disk, which rests on the upper end of the coil spring, which disk is attached to the rod extending through the coil spring, to which rod the tool mounting section is attached. For moving the tool mounting section, the tool mount preferably comprises a handle for manually pulling the tool mount against the restoring force. So, when the handle is pulled, the tool mounting section, the rod and the resting means are pulled against the coil spring, which is compressed and which generates the restoring force. So, a simple manual handling design is realized.

The handle is preferably arranged at the tool mounting section in extension of the rod, so that the tool mount has a kind of linear setup.

In another inventive embodiment the tool mount comprises an opening which is vertical to the direction of movement of the tool mount, wherein the tool inserted in the tool mount extends via a deflection in a perpendicular direction. In this embodiment the electric screwing tool is arranged for example in a horizontal direction, with the tool mount being movable in a vertical direction. As the longitudinal axis of the bolt is parallel to the direction of movement of the tool mount, a deflected connection of the tool to the bolt is provided. Therefore, the tool at the end of this deflection connection, for example a socket wrench, is positioned perpendicular to the screwing tool itself.

In an alternative embodiment, the tool mount comprises an opening which is parallel to the direction of movement, so that the tool inserted in the tool mount is parallel to the direction of movement. In this embodiment, no deflection is necessary, as all relevant elements are arranged parallel to each other.

The invention also refers to a method for mounting a bolt for fixing two elements to each other using a mounting arrangement as previously described, with the steps:
- inserting the at least partially threaded bolt in a through bore of one element or attaching it to the tool,
- moving the tool mount with an inserted electric screwing tool relative to the carrier against the restoring force,
- moving the tool adjacent to the bolt head or moving the tool with the bolt for positioning it adjacent to the through bore,
- releasing the tool mount so that the restoring force moves an engagement tool section of the tool in engagement with an engagement section of the bolt or moves the bolt into the through bore, and
- screwing the bolt with the tool in a threaded bore of the other element.

Further details of the invention will become apparent from the following figures and their description. The figures show:
- Fig. 1: shows a principle scetch of two elements, i.e. a bedframe and a main bearing house of a wind turbine, fixed to each other by a number of bolts,
- Fig. 2: shows a principle drawing of the inventive mounting arrangement,
- Fig. 3: shows a perspective drawing of the tool mounting means without the tool,
- Fig. 4: shows the tool mounting means with the tool,
- Figs. 5-7: are drawings showing the relevant steps for mounting a bolt, and
- Fig. 8: shows another embodiment of an inventive mounting arrangement.

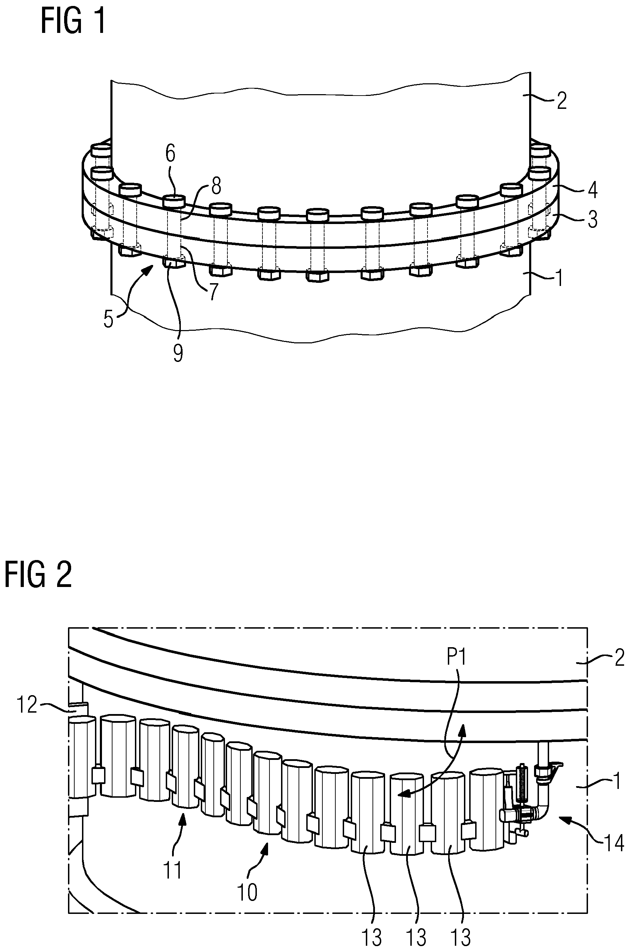

Fig. 1 shows in principle a first element 1, here a bedframe of a wind turbine, and a second element 2, here a main bearing house. Both comprise respective flanges 3, 4, where the elements 1, 2 are firmly connected to each other by a number of bolt connections 5, each comprising a bolt 6, which is inserted into a through bore 7 in the flange 3 of the element 1 and screwed into a threaded bore 8 in the flange 4 of the second element 2. The bolt 6 is at least partially threaded, preferably it is threaded over its complete length, so that a nut 9 can be screwed on the bolt. The bolt comprises a hex head connection means allowing for it to be screwed into the threaded bore 8, while the nut is afterwards used for tightly fixing the bolt connection.

Fig. 1 shows an inventive mounting arrangement 10, comprising a carrier 11 with a connecting means 12 for connecting it to one of the elements, here the element 1. This may be a screw connection or any other kind of connection allowing for firmly attaching the carrier 11 to the element 1.

The carrier 11 comprises a number of elongated carrier elements 13, which are pivotable attached to one another in a row, with the longitudinal axis of the respective elongated carrier elements 13 being parallel to each other. So, the carrier 11 may be moved like a chain within a plane, as depicted by the arrow P1. The carrier elements are preferably made of metal, so that they are stable and can support a tool mounting means 14 attached to the carrier 11 and to take any loads resting on the carrier 11, which result from the screwing process.

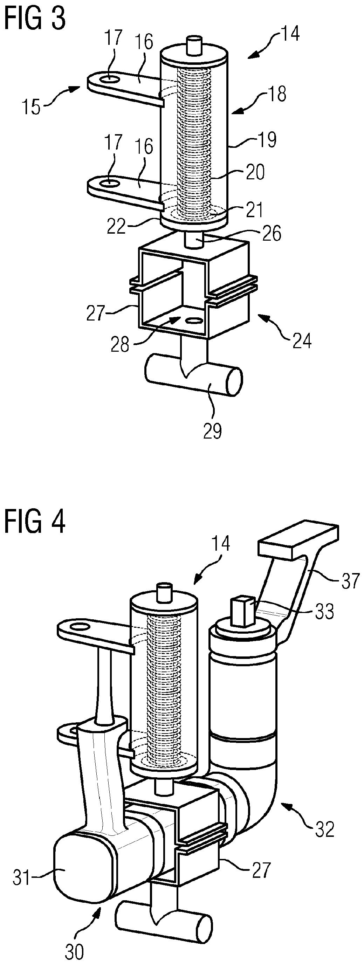

Fig. 3 shows the tool mounting means 14 in detail. It comprises an attachment section 15 with two latches 16 with respective through bores 17, in which a bolt is inserted, which also runs through the respective bores provided at the terminal carrier element, to which the tool mounting means 14 is attached. This provides an axis, on which the tool mounting means 14 can be swivelled relative to the carrier 11.

The tool mounting means 14 further comprises a holding means 18, here a cylinder 19, in which a coil spring 20 is arranged. The coil spring 20 rests with the lower end 21 at the bottom 22 of the cylinder.

The other end of the coil spring 20 is connected to a connecting section 23 of a tool mount 24. The connecting section 23 comprises a resting means 25 which rests on the upper end of the coil spring 20 and a rod 26 extending through the coil spring 20 and out of the cylinder 19. At the end of the rod 26 a rectangular tool mounting section 27 with an opening 28 is attached, which opening 28 is directed perpendicular to the longitudinal axis of the rod. At the lower end of the tool mounting section 27 a handle 29 is attached, allowing for manually pulling the tool mount 24 against the coil spring 20.

Fig. 4 shows the tool mounting means 14 with a tool 30 in form of an electric screwing tool 31 inserted in the tool mounting section 27. As, when the mounting arrangement 10 is mounted to the element 1, the opening 28 is horizontal, also the electric screwing tool 31 is arranged in a horizontal direction. The bolt 6 is arranged in a vertical direction, parallel to the moving direction of the tool mount 24. Therefore, the tool 30 comprises a deflection 32 running into an attachment section 33.

To the attachment section 33 an engagement tool 34, for example a socket wrench, is attached, which is finally engaged with the bolt 6 for screwing it into the threaded bore 8.

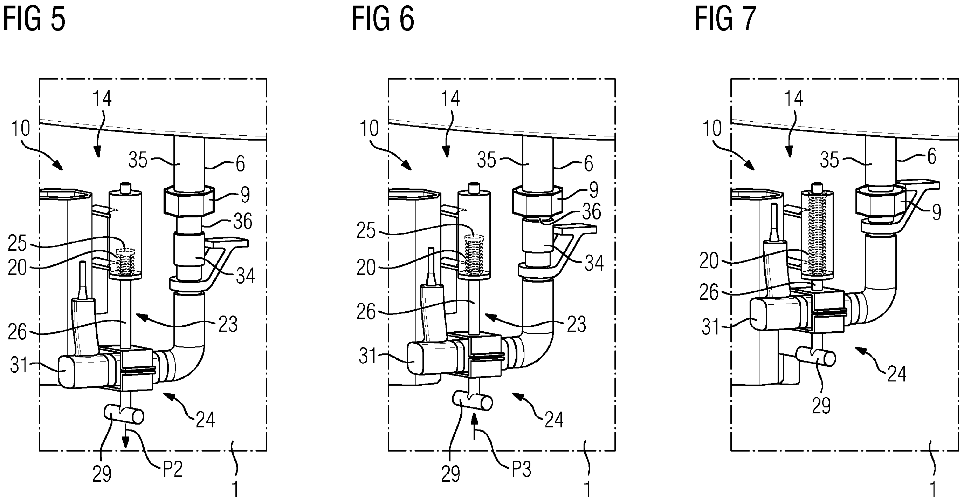

Figs. 5-7 show various steps for screwing the bolt 6. The bolt 6 comprises a thread 35. A nut 9 is screwed on the bolt 6, which nut 9 is used for finally tightening the bolt connection. The bolt 6 comprises an engagement section 36 like a hex head, at which engagement section the engagement tool 34, i.e. the socket wrench, will be connected.

Fig. 5 shows the inventive mounting arrangement 10 with the tool mounting means 14 in a position, where the tool mount 24 has been pulled down manually via the handle 29, as shown by the arrow P2. Before this pulling action, the tool mounting means 14 is positioned close to the bolt 6, which is already inserted into the through bore 7 and slightly fixed in the through bore 7, so that it cannot fall out of the through bore. After pre-positioning the tool mounting means 14 close to the bolt, the handle 29 is pulled, so that the tool mount 24 is pulled below the engagement section 36. The coil spring 20 is compressed, the restoring force is generated. Now the tool mounting means 14 is swiveled around the respective axis in the connection to the carrier 11, so that the tool mount 24 can be positioned directly underneath the engagement section 36.

In the next step, see fig. 6, the handle 29 is released as shown by the arrow P3. The restoring force of the coil spring 20 moves the tool mount 24 and thus the electric screwing tool 31 in a vertical direction against the bolt 6, so that the engagement tool 34 engages with the engagement section 36. Now the technician simply needs to start the electric screwing tool 31, which makes the engagement tool 34 rotate, thereby screwing the bolt 6 into the threaded bore 8. The connection of the screwing tool 31 respectively of the engagement tool 34 with the engagement section 36 of the bolt 6 is permanently maintained by the restoring force of the spring 20, which permanently urges the engagement tool 34 against the bolt 6. Therefore, the technician simply needs to keep the electric screwing tool 31 working, the vertical movement of the screwing tool 31 is primarily automatically realized by the restoring force of the coil spring 20, which makes the screwing tool 31 follow the movement of the bolt 6.

Fig. 7 shows the final position, where the coil spring 20 has relaxed and is in the elongated position. The bolt 6 is screwed into the threaded bore.

In the next step it is only necessary to again pull the handle 29 in order to disengage the engagement tool 34 from the engagement section 36 and to then move the tool mounting means 14 away from the bolt 6.

As fig. 7 shows, the nut 9 may be unscrewed from the thread 35. If this is the case, before disengaging the engagement tool 34 from the engagement section 36, the nut 9 is again screwed on the thread 35. Afterwards, for finally tightening the bolt 6 the nut 9 is tightened using a respective tool.

Figs. 4-7 show an arm 37, which rests against the element 1 during the screwing process supporting the tool mounting means 14.

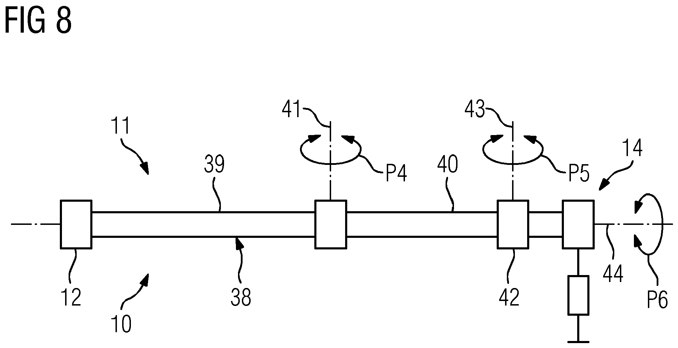

Finally, fig. 8 shows another embodiment of a mounting arrangement 10. Here, another type of carrier 11 is provided. The carrier 11 is a robot arm 38, here comprising two arm elements 39, 40. The robot arm 38 comprises a connecting means 12 for connecting it to the element. Both arm elements 39, 40 are attached to each other and can be swiveled around an axis 41, as shown by the arrow P4.

At the end of the arm element 40 another connection 42 is provided, to which the tool mounting means 14 is attached, which corresponds to the tool mounting means 14 previously disclosed.

The connection 42 allows for swiveling the tool mounting means 14 around an axis 43, as shown by the arrow P5. It also allows for a rotation of the tool mounting means around a longitudinal axis 44, as shown by the arrow P6.

Also, the robot arm 38 allows for a simple and precise positioning of the tool mounting means 14 respectively the respective tool 30 relative to the bolt 6 already inserted into the through bore, or, when the bolt 6 is already attached to the tool mounting means 14, for positioning the bolt 6 relative to the through bore of the respective element.

Although the present invention has been described in detail with reference to the preferred embodiment, the present invention is not limited by the disclosed examples from which the skilled person is able to derive other variations without departing from the scope of the invention.

## Claims

1. Mounting arrangement for mounting an at least partially threaded bolt (6) connecting one element (1) to another element (2), with one element (1) having a through bore (7) and the other element (2) having a threaded bore (8), comprising a flexible carrier (11) adapted to be fixed to one of the elements (1, 2), the carrier (11) being movable relative to the elements (1, 2), a tool mounting means (14) attached to the carrier (11) comprising a tool mount (24) which is movable against a restoring force relative to the carrier (11), to which tool mount (24) a tool (30) adapted to be connected to the bolt (6) is attachable or attached.

2. Mounting arrangement according to claim 1, **characterized in that** the carrier (11) is movable in a plane and that the tool mount (24) is movable in a direction vertical to this plane.

3. Mounting arrangement according to claim 1 or 2, **characterized in that** the carrier (11) comprises a number of elongated carrier elements (13) pivotable attached to one another in a row with parallel longitudinal axes, or that the carrier (11) is a robot arm (38) with at least two arm elements (39, 40) which are swivable and/or rotatable relative to each other.

4. Mounting arrangement according to one of the preceding claims, **characterized in that** the tool mounting means (14) comprises an attachment section (15) for attaching it to the carrier (11), wherein the tool mount (24) is movable relative to the attachment section (15) against the restoring force.

5. Mounting arrangement according to claim 3 and 4, **characterised in that** the attachment section (15) is swivable attached to a carrier element (13) or rotatable and/or swivable to an arm element (40).

6. Mounting arrangement according to claim 4 or 5, **characterized in that** the restoring force is provided by a coil spring (20) against which the tool mount (24) is movable.

7. Mounting arrangement according to claim 6, **characterized in that** the spring element is a coil spring (20) arranged in a spring holding means (18), where it rests with one end, while the other end is attached to a connecting section (23) of the tool mount (24) which can be moved for compressing the coil spring (20).

8. Mounting arrangement according to claim 7, **characterized in that** the holding means (18) is a cylinder (19) and the connecting section (23) comprises a resting means (25) attached to the coil spring end and a rod (26) extending through the coil spring (20), to which rod (26) a tool mounting section (27) is attached.

9. Mounting arrangement according to one of the preceding claims, **characterized in that** the tool mount (24) comprises a handle (29) for manually pulling the tool mount (24) against the restoring force.

10. Mounting arrangement according to claim 8 and 9, **characterized in that** the handle (29) is arranged at the tool mounting section (27) in extension of the rod (26).

11. Mounting arrangement according to one of the preceding claims, **characterised in that** the tool mounting section (27) comprises an opening which is vertical to the direction of movement of the tool mount (24), and that the tool (30) inserted in the tool mounting section (27) extends via a deflection (32) in a perpendicular direction.

12. Mounting arrangement according to one of the claims 1 to 10, **characterised in that** the tool mounting section (27) comprises an opening which is parallel to the direction of movement so that the tool (30) inserted in the tool mounting section (27) extends parallel to the direction of movement.

13. Method for mounting a bolt (6) for fixing two elements (1, 2) to each other using a mounting arrangement (10) according to one of the preceding claims, with the steps:
- inserting the at least partially threaded bolt (6) in a through bore (7) of one element (1, 2) or attaching it to the tool (30),
- moving the tool mount (24) with an inserted electric screwing tool (31) relative to the carrier (11) against the restoring force,
- moving the tool (30) adjacent to the bolt head or moving the tool (30) with the bolt (6) for positioning it adjacent to the through bore (7),
- releasing the tool mount (24) so that the restoring force moves an engagement tool (34) of the tool (30) in engagement with an engagement section (36) of the bolt (6) or moves the bolt into the through bore (7), and
- screwing the bolt (6) with the tool (30) in a threaded bore (8) of the other element (1, 2).
